# EUROPÄISCHE PATENTANMELDUNG

(11) **EP 2 083 382 A1**
(43) Veröffentlichungstag der Anmeldung: **29.07.2009**
(21) Anmeldenummer: 09150773.1
(22) Anmeldetag: 16.01.2009
(51) Int. Cl.: G06Q 10/00

(54) **Verfahren zum Aufbewahren und Abrufen von verbotenen Gegenständen oder Waren**

(30) Priorität: 22.01.2008 DE 102008005444
(71) Anmelder: Locktec GmbH, 96369 Weißenbrunn (DE)
(72) Erfinder: Heinlein, Werner, 96317, Kronach (DE); Clausen, Lukas, 96242, Sonnefeld (DE); Clausen, Olaf, 96242, Sonnefeld (DE)
(74) Vertreter: Pröll, Jürgen

(57) **Zusammenfassung**

Die Erfindung betrifft ein Verfahren, um verbotene Gegenstände oder Waren, die bei Sicherheitskontrollen beanstandet werden, nicht auf Dauer abgeben zu müssen. Die verbotenen Gegenstände werden stattdessen mit einer Kennung versehen, in einen Sammelbehälter gelegt und von einem Lagerservice deponiert. Mit der erhaltenen Kennung kann die am System teilnehmende Person den deponierten Gegenstand später beim Lagerservice über das Internet anfordern und den Versand an eine anzugebende Adresse veranlassen.

## Beschreibung

Die Erfindung betrifft ein Verfahren zum Aufbewahren und Abrufen von verbotenen Waren oder Gegenständen, die von der Mitnahme im Handgepäck ausgeschlossen sind, unter Verwendung von Etiketten und anderen Kennzeichnungen.

Der Erfindung liegt das Problem zugrunde, dass ein Passagier sogenannte "verbotene Waren und Gegenstände" z. B. nicht an Bord eines Flugzeugs mitnehmen darf. Verbotene Gegenstände sind z. B. Messer, Waffen einschl. Imitationen, Scheren, Rasierklingen, Gehstöcke mit Metallspitzen, Tennis-, Golf- und Baseballschläger, Stricknadeln, Fahrradketten, Schlagringe usw. Ferner dürfen auch Waren, wie Flüssigkeiten, Alkoholika, Cremes, Parfüms, ab einem bestimmten Mengenvolumen beim Betreten eines Flugzeugs nicht mitgenommen werden. Werden solche Gegenstände und Waren bei der Sicherheitskontrolle im Handgepäck eines Passagiers gefunden, so darf der Passagier erst die Sicherheitskontrolle passieren, wenn diese Gegenstände und Waren abgegeben worden sind. Diese werden in Abfallbehälter geworfen und später vom Flughafenpersonal entsorgt.

Alternativ hat der Passagier an einigen Flughäfen die Möglichkeit, die beanstandeten Gegenstände nachträglich am Check-In Schalter als Reisegepäck aufzugeben, am Flughafen an der Gepäckaufbewahrung oder in einem Schließfach bis zu seiner Rückkehr zu deponieren oder eine Post oder Kurierdienststelle aufzusuchen, um die Gegenstände an die von ihm gewünschte Adresse zu versenden. Hierzu muss er den Sicherheitsbereich des Flughafens wieder verlassen. Dies ist unbequem und zeitaufwändig. Er muss sich danach wieder an der Sicherheitskontrolle anstellen und sich noch einmal einer Sicherheitsüberprüfung unterziehen.

Dies ist alles sehr umständlich und zeitaufwändig, was sogar dazu führen kann, dass der Passagier seinen Flug versäumt. Deshalb gibt der Fluggast den Gegenstand oder die Ware in der Regel an der Sicherheitskontrolle ab und ärgert sich über den Verlust, was auch zu Streitigkeiten mit dem Sicherheitspersonal führen kann.

Ein ähnliches Problem besteht bei Großveranstaltungen, z.B. Open Air Konzerten, Sportveranstaltungen, politischen Veranstaltungen usw. Die Besucher dürfen "verbotene Waren und Gegenstände" nicht zur Veranstaltung mitnehmen und müssen diese beim Sicherheitspersonal abgeben. Die Veranstalter bieten keine Möglichkeit zur Hinterlegung und späteren Wiederabholung der Gegenstände. Deshalb werden diese Gegenstände in Abfallcontainer geworfen und vom Veranstalter entsorgt. Auch hier kann die Erfindung Abhilfe schaffen.

Aus der US 2006/0122858 A1 ist ein Warenverwaltungssystem für die Lagerhaltung von Waren bekannt, bei dem nach Erhalt der Ware eine Eingabe der Ware in das Warenverwaltungssystem erfolgt. Die Waren werden dabei mindestens teilweise abgebildet und die Bilder mit gespeichert. Die Bilder können einem entfernten Benutzer zur Verfügung gestellt werden. Der Benutzer kann auch veranlassen, dass die Ware bearbeitet wird. Die nachbearbeitete Ware kann wieder in das Lager aufgenommen werden. Des Weiteren ist eine Aufzeichnung verschiedener Teilbereiche des Warenverwaltungsprozesses vorgesehen. Die Lagerhaltung kann automatisiert und computergesteuert ausgeführt werden. Auch ist es möglich, Waren nach bestimmten Strukturen geordnet zu lagern.

Aus der US 4,634,849 ist es bekannt, mehrteilige Etiketten in Verbindung mit Fluggepäck zu verwenden, um darüber in einem Gepäckleitsystem die Gepäckstücke bestimmten Förderbändern zuleiten zu können. Das Etikett besteht aus einem Basisteil, an dem abnehmbar eine Vielzahl von individuellen Etiketten angebracht ist, wobei zumindest zwei Etiketten an verschiedenen Teilen des Gepäckstückes angebracht sind und die weiteren Etiketten von der Stützbasis abnehmbar sind. Diese können beispielsweise am Ticketumschlag angebracht werden oder an einer vom Passagier oder Gepäckbesitzer tragbaren Stelle positioniert werden. Die beiden am Gepäck angebrachten Etiketten beinhalten eine erste codierte Information, die maschinell abgelesen werden kann, wobei die codierten Informationen repräsentativ sind für die Identifikation des Gepäckstückes während des Transportes. Es handelt sich hierbei um das bei der Gepäckaufgabe bekannte Prinzip.

Des Weiteren ist aus der US 891,593 ein zweiteiliges Etikett bekannt, das aus einem Anhänger besteht und aus einem Abrissteil, der beispielsweise vom Passagier eines Personenzuges mitgenommen wird, während der erste Anhängerteil am Gepäck befestigt wird. Die Angaben auf den beiden Abschnitten sind identisch und in lesbarer Ausführung gehalten. Bei der Gepäckaufgabe wird dem Aufgeber der abgetrennte Abschnitt ausgehändigt und dient am Empfangsort als Ausweis für die Entgegennahme des transportierten Gepäckstückes. Ähnliche Handhabungen sind von Gepäckaufbewahrungsschaltern auf Bahnhöfen bekannt, an denen Gepäckstücke für einen bestimmten Zeitraum deponiert werden können.

Ausgehend vom dargelegten Stand der Technik und der erläuterten Problematik liegt der Erfindung die Aufgabe zugrunde, ein Verfahren anzugeben, das nicht zeitaufwändig ist und ohne Behinderung des Ablaufes von Sicherheitskontrollen durch den Besitzer verbotener Gegenstände genutzt werden kann, ohne den Verlust abzugebender verbotener Gegenstände in Kauf nehmen zu müssen. Des Weiteren soll durch die Abgabe solcher verbotener Waren und Gegenstände durch den Besitzer der Ablauf der Sicherheitskontrolle nicht nennenswert beeinträchtigt und dem Besitzer des Gegenstandes die Möglichkeit eröffnet werden, die abgegebenen Gegenstände zu einem späteren Zeitpunkt wieder zu erhalten.

Die Aufgabe löst die Erfindung durch das im Anspruch 1 angegebene Verfahren.

Vorteilhafte weitere Verfahrensschritte und Ausgestaltungsformen sind in den Unteransprüchen im Detail angegeben.

Ein Verfahren nach der Erfindung zeichnet sich dadurch aus, dass es einfach zu handhaben ist und die Investitionskosten sehr gering sind und vor Ort an den Sicherheitskontrollen keinerlei technischer Aufwand, wie Stromanschluss, Datenleitungen, Automaten o.ä. notwendig ist. Ebenso kann auf bestehende Logistiksysteme zurückgegriffen werden. Ferner ist gewährleistet, dass die Warenbewegung sehr schnell und völlig anonym abläuft.

Wird bei der Sicherheitskontrolle ein verbotener Gegenstand gefunden, so wird dieser durch den Passagier oder den Sicherheitsdienst z.B. in einen Umschlag gesteckt. Auf dem Umschlag ist in einem ersten Kennzeichen eine codierte, für den normalen Betrachter nicht lesbare, jedoch maschinell, z. B. mittels Scanner, auslesbare erste Kennung vermerkt. Der Passagier erhält eine identische oder zugeordnete Kennung, die auf einem zweiten Teil des Kennzeichens oder des Etiketts, einem Anforderungsetikett, in lesbarer Schrift oder in Zahlen/Buchstabenkombinationen aufgebracht ist, die als Ausweis für eine spätere Rückforderung des Gegenstandes oder der Ware dient.

Der Vorgang an der Sicherheitskontrolle benötigt nur wenige Sekunden und behindert den Ablauf nicht. Der Passagier hat später in aller Ruhe Zeit, seinen Gegenstand anzufordern. Das System kann auch dafür eingesetzt werden, um Gegenstände aus Gepäckstücken zu entnehmen, um eine Gewichtsgrenze nicht zu überschreiten. Das Übergepäck kann in gleicher Weise gehändelt werden.

Die Erfindung ermöglicht, dass die Gegenstände, beispielsweise lange Gegenstände, wie Baseballschläger, Billardstöcke (Billardqueues), Golfschläger, Gehstöcke oder Regenschirme mit Metallspitzen, aber auch in Beuteln, Tüten oder in Umschlägen eingelegte Gegenstände, wie Messer, Scheren, Flakons, etc., mit dem ersten Teil des Kennzeichens oder Etikettes, welches ein Warenetikett ist, versehen werden können, während der Besitzer den zweiten Teil des Etikettes oder Kennzeichens mitnimmt oder von einer Bedienperson des Sicherheitsdienstes annimmt. Der Gegenstand selbst wird durch die Etikettierung oder Kennzeichnung nicht personalisiert zwischengelagert. Die Zwischenlagerung kann dabei in einem Sammelbehälter erfolgen oder auch in einem Ablagefach innerhalb des Sicherheitsbereiches der Abfertigungshalle. Wenn der Gegenstand klein ist und verdeckt deponiert werden kann, sollte er in eine Versandtasche, einen Versandbeutel oder eine Versandbox eingestellt bzw. eingelegt werden. Der Versandbehälter wird nach dem Einlegen des Gegenstandes verschlossen. Beispielsweise kann es sich um eine Versandtasche handeln, die einen Adhäsionsverschluss aufweist, der selbstklebend ist, über den die Versandtasche verschließbar ist. Mit dem Verschließen der Versandtasche kann der Gegenstand anonym gelagert werden.

Auf der Versandtasche selbst kann das Etikett bereits aufgedruckt oder aufgeklebt sein. Der zweite Teil des Etikettes ist ablösbar ausgeführt, so dass er abziehbar oder abtrennbar ist. Das Etikett kann aber auch von einem Drucker ausgedruckt und dann erst auf die Versandtasche aufgeklebt werden. Auch kann der Drucker neben dem Sammelbehälter oder auf diesen aufgestellt oder in diesen integriert sein. Der zweite Teil ist dabei als lösbares Etikett ausgebildet und kann abgetrennt oder abgezogen werden, z. B. kann es sich um einen Adhäsionsetikettenteil handeln, das mit bedruckt wird. Handelt es sich um einen gefalteten Etikettenteil, so kann er abgetrennt werden. Dazu weist das Etikett eine perforierte Trennlinie auf, entlang der die Trennung per Hand auf einfache Weise schnell vornehmbar ist.

Das Etikett kann aber auch, insbesondere zum Anbringen an Gegenständen, als Fahne ausgebildet sein, die mittels einem Draht, Bindfaden, Gummi oder Kleber an dem Gegenstand befestigbar ist. Der zweite abtrennbare Teil befindet sich an der Fahne selbst und kann einfach abgetrennt werden. Entscheidend ist nun, dass sowohl auf dem Etikettenteil, der am Gegenstand verbleibt, als auch an dem zweiten, von dem abgebenden Besitzer des Gegenstandes mitnehmbaren Etikettenteil eine identifizierbare Kennung angebracht ist, die anonym gestaltet ist, da bei der Abgabe im Hinblick auf die schnelle Handhabung keine Adressenanschrift ausgetauscht oder angebracht werden kann. Die Kennung auf dem ersten Teil, der am Gegenstand oder an der Versandtasche verbleibt, kann in lesbarer Schrift codiert und/oder codiert als Barcode oder als Bildcode aufgebracht sein. Ebenso kann die Annahmestelle vermerkt sein, beispielsweise "FRA1" oder "FRA2" für "Frankfurt Flughafen Terminal 1" oder Frankfurt Flughafen Terminal 2" oder "MU1" oder "MU2" für die Identifizierung der Annahmestation. Die dahinter befindlichen Bestandteile der Kennung können alphanumerische Reihen oder auch sonstige Barcodes oder andere codierte Aufdrucke, wie codierte Bildaufdrucke, enthalten.

Eine zugeordnete oder identische Kennung ist auf dem zweiten Teil verschlüsselt als alphanumerisches Zeichen aufgebracht, damit der Besitzer der zweiten Kennung sich bei Anforderung des eingelagerten Gegenstandes damit über eine Website des Lagerservices ausweisen kann. Hierbei muss er sich immer ausweisen, was durch die Angabe der codierten Kennung erfolgt. Zusätzlich kann vom Rechner des Lagerservices auch überprüft werden, ob der die zweite Kennung besitzende identisch mit den Adressdaten ist, an dem die Lieferung erfolgen soll. Hierzu greift der Rechner z. B. auf ein elektrisches Einwohnermeldeverzeichnis oder auf ein Telefonbuch. Werden die Gegenstände nur gegen Zahlung einer Verwaltungs-, Bearbeitungs-, Lager- oder Versandgebühr herausgegeben, so ist in weiterer Ausgestaltung vorgesehen, dass der Inhaber zunächst die Einzahlung der Gebühren vornimmt oder die Gebühren abbuchen lässt, damit der Versand oder die Herausgabe erfolgen kann. Auch dies erfolgt elektronisch durch Folgeanzeige eines Eingabefeldes auf dem Bildschirm des Displaygerätes, z. B. mittels einer Fernbedienung.

Ein mit einem ersten Teil eines Etikettes oder Kennzeichens versehener Gegenstand, eine Versandtasche, ein Beutel oder eine Box wird durch den Besitzer oder das Sicherheitspersonal in das vorgesehene Fach in der Annahmestelle eingelegt oder in einem Sammelbehälter zwischendeponiert. Die Deponierung selbst erfolgt nach der Sammlung in einem Lager eines Lagerservices. Der Lagerservice kann beispielsweise durch einen Paket- oder durch einen Zustelldienst sichergestellt werden oder auch durch eine Spedition. In dem Lager werden die Gegenstände oder die Verpackungen, in denen sich die Gegenstände befinden, registriert. Dies erfolgt beispielsweise automatisch durch Abscannen der Kennung auf dem ersten Etikettenteil. Das Lagerverwaltungssystem kann anhand der ermittelten Kennung dem Gegenstand auch einen Lagerplatz zuordnen, um den Gegenstand leichter wieder auffinden zu können. Der Lagerplatz wird dann ebenfalls zugeordnet zum Gegenstand gespeichert. Je nach Lagerverwaltung kann dies beispielsweise auch der Tag des Eingangs sein. Dieser Tag des Eingangs kann auch auf dem Etikett vermerkt sein, insbesondere dann, wenn das Etikett an der Sicherheitskontrolle ausgedruckt wird. Selbst die Uhrzeit der Abgabe kann auf den Etikettenteilen vermerkt sein, wenn das Etikett ausgedruckt wird.

Entschließt sich der Besitzer des deponierten Gegenstandes, diesen nach seiner Reise oder nach dem Besuch der Sportstätte, etc. später anzufordern, so ist er gehalten, sich durch den zweiten Etikettenteil auszuweisen, um den nicht personalisierten Gegenstand zugesendet zu erhalten. Zu diesem Zweck kann beispielsweise der Lagerservice Webseiten über das Internetz bereitstellen, in denen beschreibbare Felder vorgesehen sind, in denen die Anschrift bzw. die Zustelladresse einzutragen ist, ebenso die Kennung, die der Inhaber von dem zweiten Etikettenteil ablesen kann und auch die Bankverbindungsdaten. Werden darüber hinaus die geforderten Gebühren bezahlt, so steht einem Versand des deponierten Gegenstandes an die vom Inhaber des zweiten Etikettenteils angegebene Versandadresse nichts entgegen.

Die Kennung kann zumindest auf dem ersten Etikettenteil in Form von Bildverschlüsselungen, z.B. in einem 2-D Barcode, enthalten sein, wie sie beispielsweise auf über das Internet bestellte Fahrkarten der Deutschen Bahn aufgedruckt sind. Die Kennung kann aber auch in einem RFID-Chip, einem auslesbaren Transponder mit Speicher, der mittels generierter Hochfrequenzfelder ausgelesen werden kann, gespeichert sein. Diese Technologie ist bekannt und wird für Warensicherheit und zum Verfolgen von Warenbewegungen eingesetzt, wobei diese Chips auch auf aufklebbaren Streifen angebracht sein können, die an der Ware selbst oder an ihrer Verpackung angebracht werden können. Das Transpondersystem arbeitet sehr zuverlässig und eignet sich auch für die Erfassung der Daten in einem bestimmten größeren Abtastbereich, so dass beim Abtasten oder Abscannen im Durchlauf die Daten schnell erfassbar sind und dem Lagerservice zur Verfügung stehen, damit bei Abholung eine Identifizierung des Gegenstandes und ein Vergleich mit der Kennung, die der Inhaber vorlegt, möglich sind. Wird die Kennung auf dem zweiten Etikettenteil zusätzlich in dieser Form aufgebracht, kann die Eingabe über einen mit dem Displaygerät, z. B. einem Homecomputer oder Laptop, verbundenen Scanner eingelesen werden.

Grundsätzlich können die Lagerhaltung und auch der Lagerservice vor Ort bedient werden, beispielsweise in einem Flughafen oder in dem Fundbüro des Rathauses einer Stadt, in der die Sportstätte oder die Diskothek sich befindet, in welcher die Gäste einer Sicherheitskontrolle unterzogen werden. Es ist aber auch eine zentrale Lagerhaltung, beispielsweise für die bayerischen Flughäfen und/oder Stadien z. B. in Nürnberg möglich. Auch ist ein zentraler Lagerservice möglich, so dass von allen Annahmestellen innerhalb einer Region Deutschlands die gesammelten Gegenstände eingelagert werden können. Die Lagerzeit sollte im Hinblick auf die zu erwartende Vielzahl von Gegenständen auf acht bis zwölf Wochen festgelegt sein. Die Bedienungen sind in den Webseiten des Lagerservices hinterlegt. Werden die anonym gelagerten Gegenstände nicht abgeholt oder angefordert, so können diese z. B. von dem Lagerservice versteigert, verkauft, verschenkt oder vernichtet werden. Die entsprechenden Geschäftsbedingungen müssen hierauf hinweisen.

Die Arbeitsweise des Verfahrens lässt sich wie folgt anhand eines Beispiels zusammenfassen:
An der Sicherheitskontrolle werden die beanstandeten verbotenen Gegenstände verpackt oder unverpackt mit einem Etikett bzw. einem Kennzeichen versehen. Auf dem ersten Etikett- oder Kennzeichenteil, dem Warenetikett, können neben der ersten Kennung, der Warenkennung, die den Gegenstand ausweist, die Annahmestelle, Informationen über die Größe des Umschlags, Gewicht des Gegenstandes oder der Ware - festgestellt mittels einer Waage - und die Track- und Trace-Nummer eines Paketdienstleisters lesbar, z.B. alphanumerisch als Pincode, oder unlesbar codiert aufgebracht sein, z. B. als Barcode oder Bildcode und/oder in digitaler Form in einem RFID-Transponder abgespeichert sein. Wenn das Etikett nicht ausgedruckt wird, sind bestimmte Angaben, wie Gewicht, nicht registriert. Auf dem zweiten Etiketten- oder Kennzeichenteil, dem Anforderungsetikett oder der Quittung, ist neben der zweiten Kennung, der Anforderungskennung, die Adresse oder mindestens die URL, und/oder die Telefax- oder Telefonnummer des Lagerservices vermerkt. Am zweiten Etikettenteil kann die zweite Kennung, die Anforderungskennung, auch in identischer Form gemäß der ersten Kennung oder in einer zugeordneten Form aufgebracht sein, mindestens aber in einer lesbaren Form, um keine Lesegeräte oder Scanner inhaberseitig für das Auslesen benutzen zu müssen. Die zweite Kennung kann sich auch hinter einer Rubbelbeschichtung befinden, so dass sie nicht ohne Weiteres von unberechtigten Personen einzusehen ist. Der zweite Teil des Etikettes oder Aufklebers wird abgetrennt und vom Passagier bzw. dem abgebenden Besitzer des Gegenstandes mitgenommen. Auf diesem Teil ist auch die Internetadresse des Lagerservices und eine Bedienungsanleitung des Systems aufgedruckt.

Entschließt sich der Benutzer des Systems, beispielsweise nach zwei oder drei Wochen, z. B. wenn er von einer Flugreise zurückgekehrt ist, den Gegenstand anzufordern, so kann er den Dienst des Lagerservices in Anspruch nehmen.

Der Benutzer des Systems kann sich beispielsweise über eine Internetseite des Dienstbetreibers durch Eingabe der Kennung, die auf dem zweiten Etiketten- oder Kennzeichenteil sichtbar ist, ausweisen und gibt diese in ein Eintragungsfeld auf dem Display mit einer Tastatur sowie eine Zustelladresse an angegebener und/oder markierter Stelle ein, an die der Gegenstand gesendet werden soll. Es versteht sich dabei von selbst, dass die Kennung so zu verschlüsseln ist, dass sie keine Reihenfolge erkennen lässt. Die Codierung sollte zum Beispiel mittels eines Zufallsgenerator erfolgen; es muss gewährleistet sein, dass der Code nur einmal existiert. Wenn der Lagerservice eine Gebühr für die Deponierung und das Versenden verlangt, so kann auf einer zugeordneten Internet-Seite ein "Zahlungsauftrag" vorgesehen sein. Nach Erhalt des Geldbetrages, z. B. durch direkte elektronische Abbuchung oder Zahlung mittels Kreditkarte sorgt der Lagerservice dafür, dass die deponierte Ware bzw. der deponierte Gegenstand an die mitgeteilte Adresse geschickt wird.

Die Erfindung versteht unter "Etikett" oder "Kennzeichen" nicht nur aufklebbare, gedruckte Etiketten oder Kennzeichen, auf denen die Kennungen aufgedruckt sind, sondern auch jegliche Form von Bedruckungen oder Beschriftungen von Feldern auf Umschlägen, Versandtaschen, -beuteln oder -boxen, soweit der zweite Teil abreißbar, abnehmbar oder abtrennbar gestaltet ist. Dies können beispielsweise Abreißlaschen sein, auf denen der Abholcode bzw. die Kennung und/oder die Kennziffern aufgebracht sind. Des Weiteren sind unter "Etikett" nach der Erfindung auch solche Kennungen zu verstehen, die in RFID-Chips enthalten sind, die beispielsweise in oder an einer Wand der Tüten, Umschläge, Versandtaschen, -beuteln, -boxen, Kartonagen angebracht sind, wobei der zweite mitnehmbare Informationsteil mindestens in gedruckter Form der Verpackung entnehmbar ist bzw. hiervon abtrennbar ist. Der zweite Teil des Etikettes kann beispielsweise eine aus der Verpackung herausnehmbare Karte sein. Diese kann auch einen RFID-Transponder bzw. -Chip mit der Kennung oder einer zugeordneten Codierung beinhalten, die von einem entsprechenden, an einen Personalcomputer anschließbaren Leser auslesbar ist. Die Kennungen und Kennziffern können ebenfalls im Barcode oder im Bildcode angebracht sein.

Die beiden Codes können auch Kennziffern beinhalten, die bei Eingabe oder automatischer Erkennung im Lager auf einen zugeordneten Server zugreifen. Dies ist unter Umständen erforderlich, da bei einem landes-, europaweiten oder weltweiten Einsatz des Verfahrens die Datenmengen zu groß sein könnten, um auf einen Server effizient verarbeitet werden zu können. In solchen Fällen kann dezentral eine Vielzahl von Servern installiert werden, die auch miteinander vernetzt sein können, so dass über einheitliche Internetseiten die Abrufprozedur durchgeführt werden kann. Wird von dem Inhaber des zweiten Etikettenteils die Kennziffer beispielsweise eingegeben, so wird automatisch die folgende Bearbeitungsseite des Lagerservices geladen und ggf. die Verbindung mit einem Client-Server hergestellt. Bei der Weiterverarbeitung auf der Seite des Lagerservices bzw. des Logistikers erfolgt der Zugriff direkt auf den entsprechenden Server durch eine lokale Verarbeitungssoftware.

Die Codes können auch eine Kennung beinhalten, die die Größe des Umschlags, des Kartons, der Box oder des Gutes, z.B. Sperrgut, und/oder das Gewicht, die Versandart und andere Bewegungsdaten festlegt. Hierdurch können die Verarbeitungs- bzw. Versandkosten im Voraus festgelegt werden. Eine spätere Erfassung der Größen ist bei der Einlagerung nicht erforderlich. Die entsprechenden Codes können auf einfache Weise insbesondere dann beim Abgeben des Gegenstandes erfasst werden, wenn über Auswahltasten, wie Sperrguttaste, beim Ziehen eines Etikettes die Kennung vorgegeben wird oder aber ein den Gegenstand erfassendes Gerät und/oder eine Waage in der Sammelbox enthalten sind, um eine dem Gut zugeordnete entsprechende Kennung oder einen Code auszugeben. Solche Codierungen können zur späteren Weiterverfolgung datenbankseitig auf einfache Weise mit der Track- und Trace-Nummer des Paketdienstleisters verknüpft werden oder bereits eine Track- und Trace-Nummer beinhalten, wodurch eine Ablaufverfolgung auf einfache Weise sichergestellt sein kann.

Auch ist es möglich, aufgegebene Umschläge, Versandtaschen, etc., die Kennungen besitzen, bereits bei der Verteilung im Rechnersystem zu registrieren, so dass ein Missbrauch mit diesen Verpackungen ausgeschlossen werden kann. Auch ist es möglich, auf den zweiten Etikettenteilen Kennungen vorzusehen, die nur der Zuordnung zu einer Codierung im ersten Teil dienen. Auch hierüber kann dann festgestellt werden, an wen der Gegenstand oder die Verpackung mit dem Gegenstand zu senden ist, wenn sich der Inhaber des zweiten Teils als Berechtigter ausweist und seine Versandadresse angibt bzw. die Gebühren für die Aufbewahrung und das Versenden bezahlt hat.

In jedem Fall kann der Abgebende der Ware davon ausgehen, dass er über einen vom Lagerservice definierten Zeitraum den deponierten Gegenstand anfordern kann. Ferner ist eine schnelle und einfache Abwicklung bei der Abgabe gegeben, so dass eine Abfertigung einer Person im Sicherheitsbereich hierdurch keine Zeitverzögerung erfährt. Falls der Benutzer des Systems ein Passagier eines Flugzeugs ist, kann er beispielsweise seine Reise beruhigt fortsetzen mit der Gewissheit, seinen deponierten Gegenstand wieder zurück zu erhalten.

Ist die maximale Deponierzeit, beispielsweise sechs Wochen, abgelaufen, so kann der Lagerservice die deponierten Artikel und Gegenstände veräußern, versteigern, karitativen Institutionen zur Nutzung und Vermarktung zuführen oder entsorgen. Die Geschäftsbedingungen des Lagerservices sind jeweils über das Internet abrufbar. Sie können aber auch per E-Mail oder Post dem Interessenten zugeschickt werden, wie dies bei elektronischen Geschäftsabläufen üblich ist.

Um Anreize zu schaffen, einen solchen Dienst in Anspruch zu nehmen, ist es möglich, die Abwicklungskosten, die Gebühren und Versandkosten im Verhältnis zum Wert der abgegebenen Ware unterschiedlich zu gestalten oder gänzlich hierauf zu verzichten, insbesondere solche Gebühren nicht zu erheben, wenn die Gegenstände direkt von der Annahmestelle oder von dem Depot des Lagerservices abgeholt werden, wobei Sitz des Lagerservices und das Lager nicht identisch sein müssen und der Lagerservice über verschiedene Depots verfügen kann. Auch muss der Versand nicht vom Lagerservice durchgeführt werden. Vielmehr kann dieser sich eines Dienstleisters, z. B. eines Zustelldienstleisters oder eines Paketzustelldienstleisters, bedienen. Auch ist eine Beteiligung an dem System in der Weise vorgesehen, dass mit der Versendung eines Gegenstandes an den Inhaber des zweiten Etiketten- oder Kennzeichenteils mit der darauf befindlichen Kennung nicht abgeholte und damit zeitlich abgelaufene Gegenstände der abgerufenen Sendung kostenlos als Geschenk beigelegt werden, die dann in den Besitz des Adressaten übergehen, wenn er diese annimmt. Auch können Präsente beigefügt oder auch Werbematerial beigegeben werden, worüber die Finanzierung des Systems ebenfalls möglich ist.

Um eine Manipulation bei der elektronischen Auftragserteilung der Zusendung auszuschließen, kann vorgesehen sein, dass der Rechner des Lagerservices bei Aufrufen der Abrufseite auch einen Sicherheitscode überträgt, der in der vorgeschriebenen Art und Weise vom Benutzer in ein dafür vorgesehenes Feld einzugeben ist. Dieser Sicherheitscode kann mit den übrigen Daten verschlüsselt werden, die vom Anfordernden eingegeben werden. Die Entschlüsselung auf der Serverseite des Lagerdienstes erfolgt unter Verwendung des Sicherheitscodes automatisch.

Das Anforderungssystem lässt sich wie folgt an einem Beispiel erläutern:
Über einen Internetrechner ruft die Person, die sich in Besitz der zweiten Kennung befindet, zunächst die Homepage des Lagerservices auf. Er erhält von dem angerufenen Rechner des Lagerservices die Homepage auf dem Display angezeigt. Die Homepage kann beispielsweise auch eine Sprachauswahl beinhalten, z. B. deutsch/englisch. Wählt der Benutzer eine Sprache aus, so erscheint in dieser Sprache die nächstfolgende Seite, die auffordert, die als Abholcode auf dem zweiten Etikettenabschnitt oder der Kennung angegebene lesbare Codierung einzugeben. Diese kann beispielsweise aus drei Blöcken bestehen. Zugleich kann aber auch mit dem Zusenden der Aufrufseite der Rechner des Lagerservices einen Sicherheitscode übertragen, der in ein weiteres Feld eingegeben werden muss. Durch Betätigen eines "Weiter"-Feldes auf der Displayanzeige wird eine weitere Seite vom Service-Rechner übertragen, die beispielsweise neben einer Erläuterung auch eine Bestätigung beinhalten kann, dass der Gegenstand im Versandlager eingetroffen ist und zugesendet werden kann. Wenn das System international ausgerichtet ist, kann beispielsweise ein Länderauswahlfeld vorgesehen sein, aus dem das Empfängerland herausgesucht werden kann. Dieses ist durch Cursorauswahl ebenfalls auswählbar. In einem weiteren Auswahlfeld können Währungen angegeben werden, aus denen der Benutzer diejenige auswählen kann, in der er die Zahlung der Gebühren beabsichtigt. Dieses Feld dient zunächst nur dazu, um die Versandkosten zu ermitteln und zur Anzeige zu bringen. Eine Weiterschalttaste führt dann zu einer Kostenübersicht auf dem Display. Auch kann auf jeder Seite eine Abbrechen-Taste vorgesehen sein, mittels der der Vorgang jeweils abgebrochen werden kann. Nach Eingabe des Bestätigungsbefehls erscheint in der darauffolgenden Seite die Kostenübersicht der Versandkosten und/oder sonstiger Gebühren (Handlingskosten und Zollgebühren). Der Benutzer kann also abwägen, ob er diese Versandkosten aufwenden möchte, um den Gegenstand zurück zu erhalten, oder ob er es ablehnt. Wird eine andere Währung bevorzugt, kann auch ein Zurückschaltungsfeld vorgesehen sein, das mit dem Cursor ausgewählt werden kann. Auf die Auswahl des "Weiter"-Feldes erscheint das Feld "Adresseneingabe". Diese Seite fordert zur Eingabe der Empfängeradresse mit allen abzufragenden Detailangaben auf. Das Feld ist beispielsweise unterteilt in Anrede, Name, Vorname, Name, Firma, E-Mail-Adresse, Straße und Hausnummer, Postleitzahl, Postcode, Ort, Bundesstaat, Land, was durch die Vorauswahl bereits eingeblendet wird.

Durch Betätigen eines Zurücksetzfeldes wird der Vorgang zurückgestellt oder durch Betätigen einer Abbrechtaste abgebrochen. Durch Betätigen des "Weiter"-Feldes wird der Vorgang fortgeschaltet. Es erscheint nach Betätigung des Feldes "Weiter" eine Seite mit der Angabe der Bezahlmethode. Bevorzugt kann hier beispielsweise ein Feld "Kreditkarte" angeklickt werden oder "Vorkasse durch Kontoüberweisung". Wenn auch dieses Feld ausgefüllt ist, kann wiederum weitergeschaltet werden. Der Anfordernde erhält sodann eine Übersicht, in der alle Daten zusammengefasst sind, einschließlich der Kostenübersicht, Bezahlung und einen Hinweis auf die allgemeinen Geschäftsbedingungen, welcher anzukreuzen ist, damit diese angezeigt werden. Erklärt sich der Abrufende mit den Geschäftsbedingungen einverstanden, so wird ihm bestätigt, dass in Kürze der Versand erfolgt. Zusätzlich kann ein Hinweis vorgesehen sein, dass durch Eingabe des Abholcodes jederzeit der Warenversand verfolgt werden kann. Die Übernahme des Gegenstandes durch einen Zulieferer wird vom Rechner registriert und als Versanddatum gespeichert, das durch

Eingabe des Abholcodes vom Abrufenden verifiziert werden kann.

Die Erfindung wird nachfolgend anhand der in den Figuren dargestellten Ablaufpläne und Ausführungsbeispiele ergänzend erläutert.

In den Zeichnungen zeigen:
- FIG 1: einen Ablaufplan, bezogen auf einen Flugpassa-gier in selbsterklärender Weise,
- FIG 2 a b c: eine Versandtasche und die vorgesehene Etikettierung mit den Bedienungsabläufen,
- FIG 3 a b c d: ein Etikett nach der Erfindung mit Handhabungs-hinweisen,
- FIG 4: einen Sammelbehälter, wie er beispielsweise im Sicherheitsüberwachungsbereich eines Flughafens aufstellbar ist, und
- FIG 5: ein weiteres Beispiel eines Sammelbehälters.

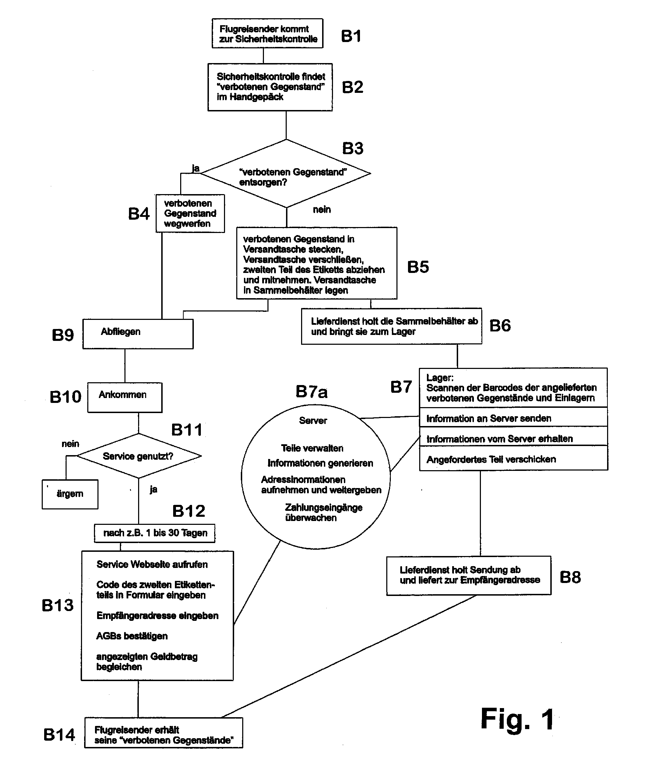

In Figur 1 ist ein Ablaufplan dargestellt, aus dem die Funktionsweise des Verfahrens für einen Passagier eines Flugzeugs ersichtlich ist. Block B1 symbolisiert einen Flugreisenden. Dieser begibt sich mit seinem Handgepäck zu der in Block B2 dargestellten Sicherheitskontrolle, die ihn und das Handgepäck nach verbotenen Gegenständen und Waren durchsucht. Stellt die Sicherheitskontrolle keine verbotenen Gegenstände fest, kann der Passagier abfliegen, was durch den Block B9 symbolisiert ist. Wird ein nicht erlaubter Gegenstand gefunden (Block B3), so kann dieser in üblicher Weise entsorgt werden, was im Block B4 symbolisiert ist, oder aber der Besitzer steckt den Gegenstand in eine Versandtasche, die erfindungsgemäß etikettiert ist, was im Block B5 zum Ausdruck kommt. Die Versandtasche wird verschlossen und in einen Sammelbehälter eingeworfen. Der Besitzer oder aber auch die Person des Sicherheitsdienstes trennt zuvor den zweiten Etikettenteil ab, der mindestens die Abholkennung enthält, und übergibt diese dem Besitzer, der sie mitnimmt. Danach kann der Passagier ebenfalls abfliegen (Block B9).

Ein Abholdienst holt den Sammelbehälter vom Flughafen ab und bringt diesen in ein Zentrallager des Lagerservices, was im Block B6 dargestellt ist. In dem Zentrallager werden die Warenkennung und eventuelle weitere Informationen auf dem ersten Etikettenteil abgescannt und die digitalen Daten zur Verwaltung und Speicherung in einer Datenbank an einen Server B7a übertragen. Des Weiteren kann vom Server der Lagerplatz gleichzeitig bestimmt und registriert werden. Die Gegenstände werden sodann gemäß Block B7 sortiert gelagert.

Kommt nun der Passagier von seiner Reise zurück oder ist er am Ziel angekommen, was durch den Block B10 symbolisiert ist, so kann er sich entscheiden, ob er den Zusendeservice gemäß Block B11 nutzen will oder nicht. Er hat sodann beispielsweise 30 Tage Zeit zu überlegen, ob der eingelagerte Gegenstand abgerufen werden soll oder nicht, was durch Block B12 symbolisiert ist. Entscheidet er sich, den deponierten Gegenstand anzufordern, so kann er beispielsweise über das Internet gemäß Block B13 die Webseite des Lagerservices aufrufen und die Fragefelder ausfüllen. Hiermit kann er selbstverständlich auch eine andere Person beauftragen, zu welchem Zweck er jedoch den zweiten Etikettenteil übergeben oder die darauf vermerkte Abrufkennung mitteilen muss. Der betreffende Passagier oder der Inhaber des zweiten Etikettenteils gibt in das Darstellungsfeld der Webseite die Abrufkennung und die Empfängeradresse ein. Der Server der Lagerverwaltung kann zugleich die Zustellungsgebühr berechnen und anzeigen, sowie ein Abrechnungs-Anzeigefeld generieren, was ebenfalls im Block B13 symbolisiert ist. Die Zusendegebühr kann z.B. in bekannter Weise mittels Kreditkartenabbuchung eingezahlt werden. Ist dies erfolgt und der Zahlungseingang kontrolliert, so kann der Lagerservice den bisher anonym hinterlegten Gegenstand dem Inhaber zuordnen und an die angegebene Empfangsadresse versenden (B7). Zu diesem Zweck bedient er sich eines Paketdienstleisters, was durch den Block B8 symbolisiert ist. Der Paketdienstleister holt das Paket ab und transportiert den Gegenstand zu dem adressierten Inhaber, was in Block B14 dargestellt ist. Der Flugreisende oder die von ihm beauftragte Person nimmt den Gegenstand gemäß Block 14 entgegen.

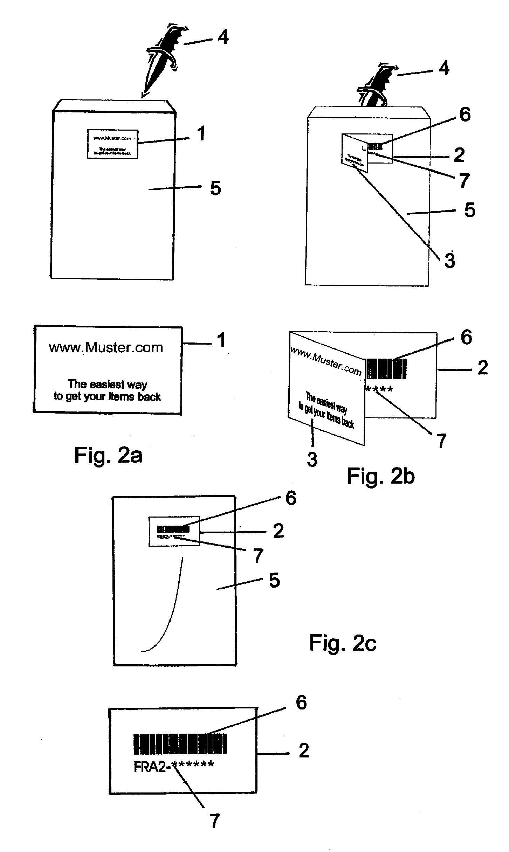

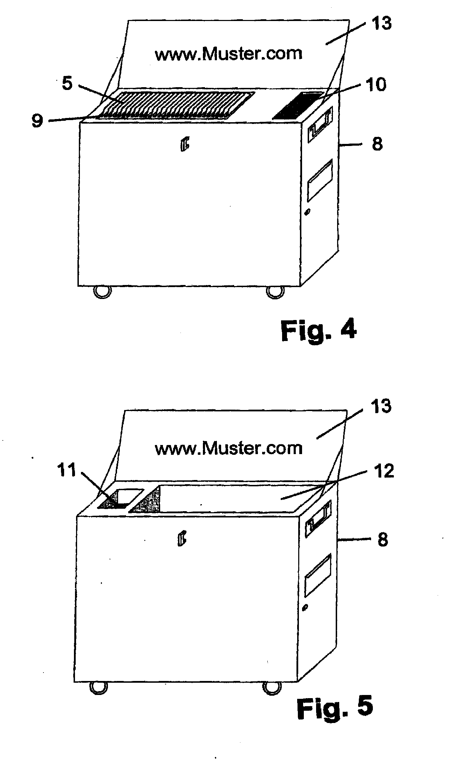

In Figur 2 ist das Einlegen eines Gegenstandes 4 in eine Versandtasche 5 und die Etikettierung sowie die weiteren Schritte der Annahme dargestellt. Der Gegenstand 4, z. B. ein Messer, das von einem Flugreisenden nicht mitgeführt werden darf, wird in eine an der Sicherheitskontrolle liegende Versandtasche 5 eingelegt. Die kontrollierte Person, die das Messer 4 noch besitzt, nimmt das Messer 4, legt dies in die Versandtasche 5 ein, was aus Figur 2b ersichtlich ist. Die Versandtasche 5 weist ein Etikett 1 auf, nämlich ein gefaltetes Etikett, wie aus Figuren 2a und 2b ersichtlich ist. Der erste Teil 2 ist fest an der Versandtasche befestigt, während der zweite Teil 3 gefaltet darüber liegt, so dass dieser Teil 3 aufgestellt, wie aus Figur 2b zu ersehen, und abgetrennt werden kann. Auf dem ersten Etikettenteil ist die Kennung als Barcode und eine verschlüsselte Angabe unter Einbeziehung des Annahmeortes FRA2, beispielsweise Frankfurt 2, sichtbar. Auf der Innenseite des abtrennbaren zweiten Teiles 3 des Etikettes 1 befindet sich eine Kennung, die entweder der Kennung 6 oder 7 zugeordnet ist oder aber mit dieser identisch ist, jedoch in einer lesbaren schriftbildlichen Formgestalt, damit diese vom Benutzer des Systems auch gelesen werden kann. Das Abtrennen des zweiten Teils 3 des Etikettes 1 ist aus Figur 2c ersichtlich. Dieser Teil wird dann mitgeführt, während der Umschlag mit dem ersten Etikettenteil 2 in einen Sammelbehälter eingeworfen oder eingelegt wird, wie er beispielsweise aus den Figuren 4 und 5 ersichtlich ist. Hierauf wird später noch eingegangen.

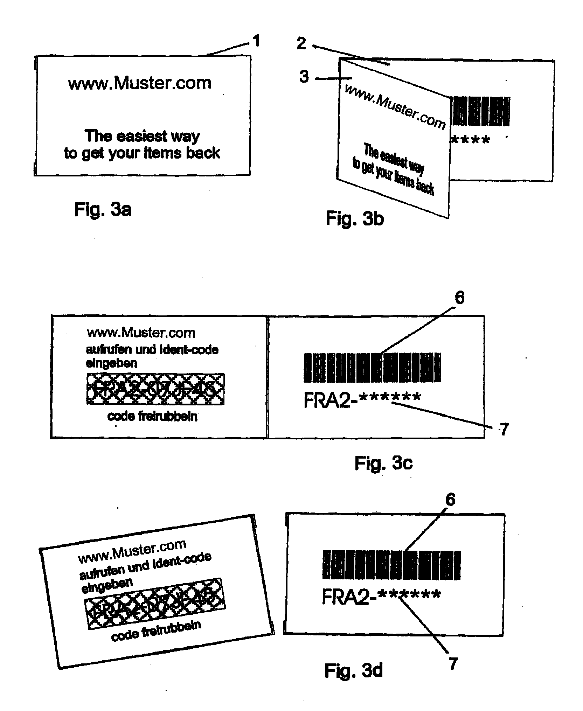

Das Etikett selbst ist in Figur 3a, 3b, 3c, 3d noch einmal dargestellt. Es kann sich dabei um ein Etikett handeln, das nachträglich auf die Versandtasche geklebt wird oder aber auch auf dieser schon angebracht ist. Auf der Oberseite des zweiten Teils 3 des Etikettes 1 ist die Internetadresse aufgedruckt, unter der der Benutzer des Systems sich später an den Lagerservice wenden kann, um den deponierten Gegenstand zugesandt zu erhalten. Unter dem hochgeklappten zweiten Teil 3 ist der erste Teil 2 sichtbar, der - wie schon anhand von Figur 2 beschrieben - einen Barcode 6 aufweist, der die Kennung beinhaltet oder auch eine andere verschlüsselte Kennung 7, die eine individuelle Zuordnung zum Gegenstand ermöglicht, jedoch in anonymer Form. Der entsprechende Gegenidentcode bzw. der identische Code ist in Klarsichtschrift, nämlich in alphanumerischen Zeichenfolgen, auf der Innenseite des zweiten Teils 3 des Etikettes 1 aufgebracht, z. B. FRA2-07JF45. Damit dieser nicht für jedermann sichtbar ist, kann er mit einer abrubbelbaren Schicht überzogen sein. Des Weiteren ist eine Bedienungsanleitung mit aufgedruckt. Dieser Teil wird nun gemäß Figur 3d abgetrennt und vom Passagier eingesteckt und kann dann später für das Abrufen des Gegenstandes verwendet werden, wie anhand von Figur 1 beschrieben.

Die Figuren 4 und 5 zeigen zwei Sammelbehälter 8, die als Rollbehälter ausgebildet sind. In dem Sammelbehälter 8 ist ein oberes Fach 9 für Versandtaschen vorgesehen. In diesem befinden sich die Versandtaschen 5, die einzeln entnommen werden können.

Des Weiteren befindet sich ein obenseitiger Einwurfschlitz 10 in der Abdeckung. Eine entnommene Versandtasche, befüllt mit einem Gegenstand, kann verschlossen in den Einwurfschlitz 10 auf einfache Weise eingegeben werden. Zuvor ist jedoch der zweite Etikettenteil 3 von dem Etikett abzutrennen.

Figur 5 zeigt ein Ausführungsbeispiel eines Sammelbehälters 8, der ebenfalls rollbar ist, mit einem Fach 11 zur Aufnahme von Etiketten 1. Der Benutzer kann ein solches Etikett dem Fach 11 entnehmen und am Gegenstand selbst befestigen. Der Gegenstand kann in die große Öffnung 12 des Sammelbehälters eingegeben werden. Beide Behälter sind mit Deckeln 13 verschließbar, so dass sie nach dem Befüllen z. B. am Ende eines Arbeitstages von einem Abholdienst aus dem Sicherheitskontrollbereich des Flughafens abgezogen und durch neue ausgetauscht werden können. Die Sammelbehälter 8 werden dann ins Zentrallager verbracht und dort werden die einzelnen Gegenstände bzw. die Versandtaschen mit den Gegenständen registriert und gelagert, um sie während einer bestimmten Zeitspanne abrufbereit zu deponieren.

## Patentansprüche

1. Verfahren zum Aufbewahren und Abrufen von verbotenen Waren und/oder Gegenständen, die von der Mitnahme im Handgepäck ausgeschlossen sind, unter Verwendung von Etiketten oder anderen Kennzeichen mit folgenden Verfahrensschritten:
a) Versehen des Gegenstandes mit mindestens einem ersten Teil (2) eines zweiteiligen Etiketts (1) oder Kennzeichens, das an dem ersten Teil (2) mindestens eine erste Kennung (6, 7) und an dem zweiten Teil (3) mindestens eine zweite Kennung (6, 7) und eine Kommunikationsadresse eines Lagerservices aufweist, oder Einstellen oder Einlegen des Gegenstandes (4) in eine mit einem solchen zweiteiligen Etikett (1) oder Kennzeichen versehene oder bedruckte Versandtasche (5), einen -beutel oder eine -box, wobei die zweite Kennung (6, 7) auf dem zweiten Teil (3) numerisch und/oder alphanumerisch codiert oder uncodiert und lesbar aufgebracht ist und die erste Kennung im Barcode und/oder numerisch und/oder alphanumerisch codiert lesbar und/oder auf andere Art und Weise verschlüsselt, mit der zweiten Kennung nicht übereinstimmend, aufgebracht ist;
b) Abziehen oder Abtrennen oder Entgegennehmen des abzieh- oder abtrennbaren oder abgetrennten zweiten Teils (3) des Etiketts (1) oder anderer Kennzeichen und Mitnahme desselben durch die die Ware und/oder den Gegenstand abgebende Person;
c) Deponieren des Gegenstandes in einem Lager eines Lagerservices;
d) Aufrufen einer Anforderungsseite von einem Rechner des Lagerservices über ein elektronisches Kommunikationssystem mittels eines Displaygerätes mit angeschlossenen Eingabemitteln durch die Person, die im Besitz des zweiten Teils (3) des Etikettes (1) oder des Kennzeichens oder der zweiten Kennung ist;
e) Mitteilen der auf dem zweiten Teil (3) des Etikettes (1) oder Kennzeichens angegebenen zweiten Kennung (6, 7) durch Eintrag in ein beschreibbares Feld in einer auf einem Display des Displaygerätes angezeigten Seite und Senden einer Aufforderung an den Lagerservice zum Zusenden des unter der gleichen oder einer zugeordneten ersten Kennung deponierten Gegenstandes (4) durch die Person, die im Besitz des zweiten Teils (3) des Etikettes oder des Kennzeichnens ist, an eine bestimmte Zustelladresse;
f) Zusenden des deponierten Gegenstandes an die angegebene Zustelladresse.

2. Verfahren nach Anspruch 1, **gekennzeichnet durch** folgende weiteren Merkmale:
- Zwischenlagern des etikettierten Gegenstandes oder der etikettierten Versandtasche (5), des -beutels oder der -box, in der sich der abgegebene Gegenstand befindet, in einem Sammelbehälter (8) in der Annahmestelle und Verbringen des Sammelbehälters in ein Lager des Lagerservices,
- Registrieren mindestens der ersten Kennung (6, 7) auf dem ersten Teil (2) des Etikettes (1) **durch** den Lagerservice,
- Sortieren und Lagern der Gegenstände (4) und/oder der Versandtaschen (5), -beutel oder -boxen in dem Lager nach bestimmten Kriterien,
- Durchführen eines Kennungsvergleiches der ersten Kennung (6, 7) mit der von der anfordernden Person mitgeteilten zweiten Kennung (6, 7) oder Abgleich der Zugehörigkeit beider Kennungen (6, 7) **durch** den Rechner des Lagerservices.

3. Verfahren nach Anspruch 1 oder 2, **dadurch gekennzeichnet, dass** die erste Kennung (6, 7) vom ersten Teil des Etikettes (1) oder Kennzeichens im Lager von einem Lese- oder Erfassungsgerät automatisch ausgelesen und in einer Datenbank des Rechners des Lagerservices gespeichert wird und dass bei Mitteilung der zweiten Kennung (6, 7) vom Rechner überprüft wird, ob der Gegenstand (4) unter derselben oder der zugeordneten ersten Kennung (6, 7) sich in einem Lager des Lagerservices befindet.

4. Verfahren nach Anspruch 1, **dadurch gekennzeichnet, dass** die Teile (2, 3) des Etikettes (1) oder Kennzeichens in einer Fläche untereinander, nebeneinander oder übereinander oder aufeinander liegend, räumlich angrenzend oder versetzt angebracht sind und der zweite Teil (3) vom ersten Teil (2) abtrennbar ist, wobei die Teile (2, 3) auch direkt auf einem Umschlag, eine Versandtasche (5), -beutel oder -box aufdruckbar sind.

5. Verfahren nach Anspruch 1, **dadurch gekennzeichnet, dass** zusätzlich zu der ersten und/oder zweiten Kennung Kennziffern vorgesehen sind, die einen automatischen Zugriff beim Auslesen im Lager auf einen bestimmten Rechner einer Datenbank oder einem Server ermöglichen oder bei Eingabe durch die abrufende Person den bestimmten Rechner, die Datenbank oder den Server adressieren, um automatisch eine Anforderungsseite über das Kommunikationssystem angezeigt zu erhalten und/oder dass die erste und/oder die zweite Kennung (6, 7) zusätzlich auch Informationen über die Größe des Umschlags, der Versandtasche (5), des -beutels oder der -box und/oder Informationen über das Gewicht und/oder die Art des Gegenstandes enthalten.

6. Verfahren nach Anspruch 1 oder 5, **dadurch gekennzeichnet, dass** mindestens die erste Kennung (6, 7) zusätzliche Weiterverfolgungskennzeichen enthält, die mit der Track- und Trace-Nummer eines Paketdienstleisters verknüpfbar sind oder dass mindestens die erste Kennung (6, 7) die Track- und Trace-Nummer eines Paketdienstleisters ist oder enthält.

7. Verfahren nach Anspruch 1, **dadurch gekennzeichnet, dass** auf den Etiketten- oder Kennzeichenteilen (2, 3) oder mindestens auf dem ersten Etikettenoder Kennzeichenteil (2) die Annahmestelle codiert verdeckt oder sichtbar und/oder lesbar vermerkt ist und/oder dass die Bezeichnung oder Codierung der Annahmestelle Teil der ersten und/oder der zweiten Kennung (6, 7) ist oder die Annahmestelle über die Datenbank des Servers dieser zusätzlichen Information der Kennung zuordenbar ist.

8. Verfahren nach Anspruch 1 oder 4, **dadurch gekennzeichnet, dass** der zweite Teil (3) des Etikettes (1) oder Kennzeichens vom ersten Teil (2) abziehbar ist oder längs einer Faltkante vom ersten Etiketten- oder Kennzeichenteil (2) abtrennbar angeordnet ist und/oder dass die zweite Kennung (6, 7) auf dem zweiten Etiketten- oder Kennzeichenteil (3) hinter einer Rubbelschicht oder einer abziehbaren Beschichtung lesbar mit numerischen Zeichen und/oder Buchstaben aufgedruckt ist.

9. Verfahren nach Anspruch 1, **dadurch gekennzeichnet, dass** die erste Kennung (6, 7) mindestens auf dem ersten Etiketten- oder Kennzeichenteil (2) alternativ oder ergänzend in einem RFID-Speicher gespeichert ist, der von einem Lesegerät des Lagerservices auslesbar ist und/oder dass die erste Kennung verschiedene Codierungen enthält, die über eine Datenbank mittels eines Rechners miteinander verknüpfbar und/oder auf ihre Gültigkeit überprüfbar sind.

10. Verfahren nach Anspruch 1, **dadurch gekennzeichnet, dass** die zweite Kennung im zweiten Teil (3) zusätzlich in einem RFID-Chip gespeichert ist, der mittels eines an einen Computer anschließbaren Lesegerätes auslesbar ist.

11. Verfahren nach Anspruch 1, **dadurch gekennzelehnet, dass** das Etikett (1) oder Kennzeichen von einem Drucker in der Annahmestelle ausgedruckt wird oder vorgedruckt von einem Spender oder einer Rolle abnehmbar ist und mindestens der erste Teil (2) an dem Gegenstand (4) oder der Versandtasche (5), dem -beutel oder der -box anklebbar, anbindbar oder auf andere Art und Weise hieran befestigbar oder als solches aufgedruckt ist, wobei der zweite Teil (3) als abtrennbare Lasche bedruckt ist.

12. Verfahren nach Anspruch 11, **dadurch gekennzeichnet , dass** beim Drucken die Kennung und/oder die Codierungen an einen Server des Lagerservices übertragen werden.

13. Verfahren nach Anspruch 1, **dadurch gekennzeichnet, dass** mindestens am zweiten Teil (3) des Etikettes (1) oder Kennzeichens die Adresse und/oder die Internetadresse und/oder eine andere Kommunikationsadresse, wie Telefonnummer, Telefaxnummer, des Lagerservices als Korrespondenzadresse vermerkt ist.

14. Verfahren nach Anspruch 1, **dadurch gekennzeichnet, dass** die Anforderung des Gegenstandes über eine Website oder mehrere Websites erfolgt, die mindestens Eingabefelder zur Eingabe der Kennung (6, 7) aufweist, in welche die Kennung (6, 7) des zweiten Etiketten- oder Kennzeichenteils (3) vom Inhaber einzugeben ist, und ein Adressenfeld aufweist, in welches die Empfängeradresse einzugeben ist, an die der Gegenstand geschickt werden soll und dass der Lagerservice eine Versandbestätigung an den Auftraggeber sendet.

15. Verfahren nach Anspruch 14, **dadurch gekennzeichnet, dass** ein weiteres Feld oder Felder auf der Abrufseite zur Eingabe der Daten für die Abwicklung des Zahlungsverkehrs bezüglich der Zahlung der Bearbeitungs-, Lager- und Versandgebühr enthalten ist bzw. sind und/oder dass ein Eingabefeld für gewünschte Zustelltermine und/oder für die gewünschte Versandart, wie Express, Kurier, vorgesehen ist.
